# EUROPÄISCHE PATENTSCHRIFT

(11) **EP 1 751 521 B1**
(45) Veröffentlichungstag und Bekanntmachung des Hinweises auf die Patenterteilung: **26.03.2008**
(21) Anmeldenummer: 05755490.9
(22) Anmeldetag: 27.05.2005
(51) Int. Cl.: G01N 21/35, G01N 21/59, G01N 21/15

(54) **VORRICHTUNG UND VERFAHREN ZUR OPTISCHEN DETEKTION VON IN ABGASEN CHEMISCHER PROZESSE ENTHALTENEN STOFFEN**
DEVICE AND METHOD FOR OPTICALLY DETECTING SUBSTANCES CONTAINED IN WASTE GASES OF CHEMICAL PROCESSES
DISPOSITIF ET PROCEDE POUR LA DETECTION OPTIQUE DE SUBSTANCES CONTENUES DANS LES GAZ RESIDUAIRES DE PROCESSUS CHIMIQUES

(30) Priorität: 04.06.2004 DE 102004028420
(43) Veröffentlichungstag der Anmeldung: 14.02.2007
(73) Patentinhaber: Fraunhofer-Gesellschaft zur Förderung der angewandten Forschung e.V., 80686 München (DE)
(72) Erfinder: DANI, Ines, 09244 Lichtenau (DE); GRÄHLERT, Wulf, 01277 Dresden (DE); HOPFE, Volkmar, 01814 Kleingiesshübel (DE); MÄDER, Gerrit, 01187 Dresden (DE)
(74) Vertreter: Pfenning, Meinig & Partner GbR
(86) Internationale Anmeldenummer: PCT/DE2005/000985
(87) Internationale Veröffentlichungsnummer: WO 2005/119213

(56) Entgegenhaltungen:
- EP-A- 1 070 943
- US-A- 4 443 072
- US-A1- 2004 058 488
- PATENT ABSTRACTS OF JAPAN Bd. 017, Nr. 495 (P-1608), 7. September 1993 (1993-09-07) & JP 05 126738 A (NISSHIN FLOUR MILLING CO LTD; others: 01), 21. Mai 1993 (1993-05-21)

## Beschreibung

Die Erfindung betrifft eine Vorrichtung und ein Verfahren zur optischen Detektion von in Abgasen chemischer Prozesse enthaltenen Stoffen, die bei unterschiedlichen chemischen Prozessen gebildet, freigesetzt und als Bestandteil eines Abgasstromes aus einer Reaktions- oder Vakuumkammer geführt werden. Dabei kann die Detektion der Stoffe zeitnah zum Prozess in-situ, also unmittelbar im Abgas durchgeführt werden. So können auch unterschiedlichste Stoffe und chemische Verbindungen die chemisch reaktiv, korrosionsfördernd oder toxikologisch bedenklich sind, wie dies beispielsweise bei unterschiedlichen Chlor- oder Fluorverbindungen der Fall ist, ohne weiteres detektiert werden.

Außerdem können Rückschlüsse auf den Ablauf der jeweils durchgeführten chemischen Prozesse getroffen werden, wenn bestimmte Stoffe detektiert oder nicht mehr detektiert werden, so dass ein entsprechender Einfluss auf die Führung des jeweiligen chemischen Prozesses ausgeübt, der Beginn oder eine Beendigung des chemischen Prozesses eingeleitet werden kann. Die Detektion kann auch quantitativ erfolgen, so dass die jeweiligen Anteile von Stoffen im Abgasstrom erfasst und ggf. für eine Prozessregelung berücksichtigt werden können.

So kann beispielsweise ein Prozess, bei dem durch Erzeugung eines Plasmas die Innenreinigung einer Vakuumkammer durchgeführt wird, beendet werden, wenn ein ausreichender Reinheitsgrad innerhalb der Vakuumkammer zu verzeichnen ist. Dies kann beispielsweise dann der Fall sein, wenn im detektierten Abgasstrom keine für weitere Prozesse kritischen gasförmigen oder partikelförmigen Bestandteile mehr enthalten sind bzw. keine Reaktionsprodukte bei Reinigungsprozessen, so dass die für eine solche Reinigung erforderliche Zeit auf ein Minimum beschränkt werden kann.

Bei herkömmlichen Lösungen ist es üblich, einzelne Proben sukzessive aus dem Abgasstrom abzuzweigen und eine entsprechende Detektion in mehr oder weniger großen Zeitabständen für die jeweiligen Einzelproben durchzuführen. Dadurch kann aber kein zeitnaher Eingriff auf den jeweiligen Prozess erfolgen.

Auch die Abzweigung eines Teilstromes aus dem Gesamtabgasstrom ist nachteilig. Hierbei reduziert sich die einer Detektion unterziehbare Gesamtabgasmenge und insbesondere die absolute Menge der zu detektierenden Stoffe ist entsprechend verkleinert, deren Anteil ohnehin schon sehr klein sein kann. Dadurch kann es also zu Detektionsfehlern kommen, die soweit gehen können, dass Spuren von aber wesentlichen Stoffen im Abgas nicht bzw. nur sehr zeitlich verzögert erkannt werden können. Durch die zeitliche Verzögerung können instabile Verbindungen (sog. Intermediate) nicht oder nur eingeschränkt detektiert werden. Die Intermediate sind aber oft prozessbeherrschend, so dass deren korrekter Nachweis besonders wichtig für eine Prozessregelung sein kann.

Bei einer kontinuierlichen Detektion auch auf optischem Wege im gesamten Abgasstrom, wie sie beispielsweise in EP 0 768 525 B1 beschrieben ist, bewirken aber feste Partikel bzw. aggressive Gase, die häufig im Abgasstrom und darin in relativ großer Menge enthalten sind, erhebliche Nachteile.

Feste Partikel stören nicht nur die optische Detektion an sich, da sie in der Regel für die jeweilige elektromagnetische Strahlung nicht transparent oder lichtstreuend sind und auf dem Wege durch eine optische Messzelle häufig den Strahlengang der Strahlung optisch blockieren oder behindern, sondern sie stellen auch ein Problem durch das häufige Anhaften an Wänden oder auch an Fenstern innerhalb von Messzellen dar. Dies führt zur Schichtbildung, die zu einer Querschnittsreduzierung und diese wieder zur Erhöhung der Strömungsgeschwindigkeit und Turbulenzbildung der Abgasströmung führt. Durch eine Fensterbeschichtung reduziert sich die Transmissivität und es ist somit eine Reinigung bzw. ein Austausch von Fenstern in kurzen Zeitabständen erforderlich.

Dadurch ist eine Reinigung der Messzellen in mehr oder weniger kurzen Zeitabständen erforderlich, die oft nicht in ohnehin erforderliche Reinigungs- oder Wartungszyklen der Prozesstechnik fallen. Dadurch entstehen Ausfallzeiten oder es ist mindestens ein redundantes zusätzliches Meßsystem erforderlich. Beides ist unter dem Kostenaspekt unerwünscht.

Aus EP 1 070 943 A1 sind ein Verfahren und ein System zur Verhinderung der Beschichtung optischer Komponenten eines spektroskopischen Sensors bekannt. Dabei soll ein Spülgas unmittelbar über die kritische Oberfläche vollflächig gerichtet werden.

Eine ähnliche technische Lösung ist in US 4,443,072 beschrieben. Dabei soll eine turbulente Strömung eines Spülgases über die Oberfläche von Fenstern geführt werden. Die Fenster sind an Flanschen außerhalb eines eigentlichen Messbereichs angeordnet.

Die in US 2004/0058488 A1 beschriebene technische Lösung betrifft ein Überwachungssystem mit einem Infrarotdetektor. Dabei wird ein Gas durch einen Probenbereich geführt. Am Probenbereich ist an einer Seite eine Quelle für elektromagnetische Strahlung im Wellenlängenbereich des infraroten Lichts und dazu gegen-überliegend ein Detektor außerhalb des Probenbereichs angeordnet, wobei dazwischen Abstandsräume ausgebildet sind. Von dort wird ein Spülgas dem Probenbereich zugeführt.

Es ist daher Aufgabe der Erfindung, eine Möglichkeit zur zeitnahen Detektion von in Abgasen chemischer Prozesse enthaltenen Stoffen in situ durchführen zu können, die über große Zeiträume betriebssicher eingesetzt und eine ausreichend genaue Erfassung von Stoffen in einem Abgasstrom ermöglicht.

Erfindungsgemäß wird diese Aufgabe mit einer Vorrichtung, die die Merkmale des Anspruchs 1 und einem Verfahren, das die Merkmale des Anspruchs 12 aufweist, gelöst. Vorteilhafte Ausgestaltungsformen und Weiterbildungen der Erfindung können mit den in den untergeordneten Ansprüchen bezeichneten Merkmalen erreicht werden.

Die erfindungsgemäße Lösung zur Detektion von in Abgasen chemischer Prozesse enthaltenen Stoffen ist dabei so gestaltet, dass möglichst die gesamten Abgase durch ein eine optische Messstrecke bildendes Kanalelement geführt werden. An diesem Kanalelement sind zwei Flansche angeordnet, die über jeweils mindestens ein transparentes Fensterelement gasdicht gegenüber der Umgebungsatmosphäre abgeschlossen sind.

Durch die Fensterelemente und Flansche wird elektromagnetische Strahlung durch das Kanalelement hindurchgeführt und trifft auf einen für eine Stoffanalyse geeigneten optischen Detektor auf, mit dessen Hilfe mindestens ein im Abgas enthaltener Stoff, möglichst auch quantitativ detektiert werden kann.

An den Flanschen sind Spülgaszuführungen vorhanden, über die ein inertes bzw. ein Spülgas mit bekannter Konsistenz in die Flansche eingeführt werden kann. Die Spülgaszufuhr sichert dabei, dass sich ggf. im Abgas enthaltene Stoffe, insbesondere feste Partikel nicht auf der Oberfläche, der für die elektromagnetische Strahlung transparenten Fensterelemente absetzen oder anlagern kann.

Der Spülgasstrom in den Flansch, der in Strömungsrichtung des durch das Kanalelement geführten Abgasstromes proximal angeordnet ist, wird dabei so geführt und beeinflusst, dass sich ausgehend vom Mündungsbereich dieses Flansches in das Kanalelement eine zumindest überwiegend laminare Spülgasströmung im Bodenbereich des Kanalelementes ausbildet, die quasi einen Film bildet, der wenn überhaupt nur geringfügig mit dem eigentlich zu detektierenden Abgas kontaminiert wird und eine fluidische Barriere und gleichzeitig Transportmedium für feste Partikel gegenüber der Innenwand des Kanalelementes bildet, so dass ein zu einer Schichtbildung führendes Anhaften verhindert werden kann.

Diese Spülgasströmung sollte möglichst über die gesamte Länge des Kanalelementes ausgebildet sein und maximal 20 % des freien Querschnitts des Kanalelementes ausfüllen.

Das Kanalelement kann dann so ausgerichtet und dimensioniert sein, dass die festen Partikel gravitationskraftbedingt im unteren Bereich der Abgasströmung auf der Spülgasströmung "aufschwimmend" mitgeführt und über einen distal angeordneten Austritt für Abgas aus dem Kanalelement abgezogen werden, um einer nachfolgenden Abgasnachbehandlung unterzogen zu werden.

Dadurch ist ein großer Bereich des freien Querschnittes des Kanalelementes frei von festen Partikeln und durch die Gasschichtung tritt, wenn überhaupt nur eine geringfügige Verdünnung des Abgases im für die optische Detektion genutzten Bereich des Kanalelementes mit Spülgas auf.

Der im Wesentlichen unbeeinflusste Querschnittsbereich des Kanalelementes sollte für die optische Detektion genutzt werden. Dementsprechend sollte die jeweilige elektromagnetische Strahlung oberhalb der Spülgasströmung, also dem Bodenbereich und den von dieser im Abgasstrom mitgeführten festen Partikeln in Strahlform geführt sein.

So sollte zumindest der Flansch in distaler Richtung des Kanalelementes in einem Abstand vom Boden, möglichst weit oben angeordnet sein.

Der Eintritt der elektromagnetischen Strahlung einer Strahlungsquelle durch ein Fensterelement sollte ebenfalls in einem Abstand oberhalb des Bodens im Mündungsbereich des entsprechenden Flansches erfolgen. Dabei sollte eine schräg geneigte Strahlführung bevorzugt in Richtung auf den optischen Detektor bevorzugt werden.

Die Längsachse des Kanalelementes, die im Wesentlichen auch die Strömungsrichtung des Abgasstromes durch das Kanalelement mitbestimmt, sollte möglichst horizontal ausgerichtet sein, um die auf die festen Partikel wirkende Gravitation gut ausnutzen zu können. In bestimmten Fällen kann aber auch eine Neigung, dann bevorzugt die eine vertikal abfallende Abgasströmung ermöglicht, zugelassen werden. Der Neigungswinkel sollte jedoch möglichst klein gehalten werden und 45° nicht überschreiten.

Der proximal angeordnete Flansch, über den die Spülgasströmung im Kanalelement ausgebildet wird, sollte im Mündungsbereich möglichst keinen Absatz zum Bodenbereich des Kanalelementes oder eine Kante aufweisen und bündig in den Bodenbereich des Kanalelementes auslaufen, so dass Verwirbelungen der Gasströmungen in diesem Bereich vermieden werden können.

Um die Sperrwirkung des Spülgases in den Flanschen sichern zu können, durch die ein Eintritt von Stoffen und Partikeln aus dem Abgas in die Flansche hinein bis hin zu den Fensterelementen vermieden werden soll, sollten die Zuführungen für das Spülgas in die Flansche in einem Abstand zum Mündungsbereich in das Kanalelement und möglichst auch einen Abstand zu den Fensterelementen angeordnet sein. Dabei kann der freie Querschnitt in den Flanschen, der Volumenstrom von Abgas aus dem Prozess, der Spülgasvolumenstrom sowie die Strömungsgeschwindigkeiten der Gase entsprechend gewählt werden, um die Verschmutzung bzw. Beschichtung der Fensterelemente zu vermeiden.

Besonders vorteilhaft ist es zwei in einem Abstand zueinander angeordnete Spülgaszuführungen in Flanschen vorzusehen. Damit kann ein Schleiereffekt mit Spülgas vor der in das Innere des jeweiligen Flansches weisenden Oberfläche von Fensterelementen erreicht werden. Außerdem besteht so die Möglichkeit die Strömung des Spülgases aus dem Flansch in Richtung Kanalelement zu beeinflussen. Hierbei hat sich eine spiralförmige Zirkularströmung von Spülgas im Fensterbereich eines Flansches als günstig erwiesen.

Die Erfindung kann außerdem weitergebildet werden indem eine Regelung des über Flansche zugeführten Spülgases unter Berücksichtigung des jeweiligen Abgasvolumenstromes und/oder der Strömungsgeschwindigkeit des Abgases innerhalb des Kanalelementes durchgeführt wird, um den Schutz der Fensterelemente bei den verschiedenen Betriebszuständen zu sichern, ein Anhaften von festen Partikeln an der Innenwand des Kanalelementes zu vermeiden und für die optische Detektion günstige Verhältnisse innerhalb des Kanalelementes einhalten zu können.

Vorteilhaft ist es an den jeweiligen Flanschen jeweils Paare von Fensterelementen, zwischen denen ein Spalt ausgebildet ist, einzusetzen.

In diesem Fall kann eine Einrichtung zur Messung und/oder Überwachung des Druckes innerhalb des Spaltes zwischen den Fensterelementen vorhanden sein, die mit jeweils einer Betätigungseinrichtung für ein Verschlusselement zusammenwirkt. Eine solche Einrichtung sichert dabei das bei einer vorgebbaren Veränderung des Innendruckes im Spalt zwischen den jeweils zwei Fensterelementen mit einem Verschlusselement ein gasdichter Verschluss des Kanalelementes realisiert wird.

So kann ein solches Verschlusselement das Kanalelement im Bereich eines Paares von Fensterelementen verschließen, wenn innerhalb eines Spaltes zwischen zwei Fensterelementen eine Erhöhung oder Verringerung des Druckes erkannt wird. So können eine jeweilige Betätigungseinrichtung aktiviert werden, wenn vorgebbare maximale oder minimale Innendrücke im Spalt bzw. ein vorgebbarer Druckanstieg oder Druckabfall erfasst werden.

Dies ist in der Regel dann erforderlich, wenn eine entsprechende Beschädigung an zumindest einem Fensterelement aufgetreten ist oder ein die Fensterelemente gegen das Kanalelement abdichtendes Dichtelement seine Gasdichtheit verloren hat.

Die elektromagnetische Strahlung wird dabei so durch die optische Messstrecke durch das Kanalelement geführt, dass die jeweiligen Paare an Fensterelementen im Strahlengang der jeweiligen elektromagnetischen Strahlung angeordnet sind.

Die eingesetzten Verschlusselemente können in Form von Platten- oder Drehschiebern ausgebildet sein. Sie sollten möglichst in Bezug zu den Fensterelementen im Inneren des Kanalelementes angeordnet und gegenüber dem Gehäuse des Kanalelementes gasdicht abgedichtet sein. Dies wirkt sich insbesondere vorteilhaft aus, wenn bei Zerstörung oder infolge von Alterung der Austausch einzelner Fenster- oder Dichtungselemente erforderlich ist und diese dann von außen zugänglich sind.

Durch einen solchen gasdichten Verschluss in diesen kritischen Fällen kann mit hoher Sicherheit verhindert werden, dass gegebenenfalls aggressive und toxische Stoffe in die Umgebung austreten können oder gegebenenfalls auch Umgebungsatmosphäre in eine Vakuum- oder Reaktionskammer als ein Raum für eine Durchführung chemischer Prozesse eindringen kann.

Wie bereits angedeutet, sollte die Detektion der jeweiligen Stoffe kontinuierlich, in-situ und auf optischem Wege erfolgen. Hierzu bietet sich eine wellenlängen selektive Detektion mit entsprechend geeigneten optischen Detektoren unter Ausnutzung für bestimmte Stoffe spezifischer Absorptionsbanden/-linien oder Absorptionsspektren an. Ein hierfür geeigneter Detektor ist dann außerhalb der optischen Messstrecke, dem Kanalelement hinter einem Paar von optisch transparenten Fensterelementen angeordnet und es kann eine Detektion der jeweiligen Intensitäten von stoffspezifisch ausgewählten Wellenlängen aus dem Spektrum der durch die optische Messstrecke gerichteten elektromagnetischen Strahlung erfolgen.

So kann beispielsweise eine Fourier-Transformations-Infrarotspektroskopie (FTIR) durchgeführt werden. Hierfür können ein herkömmliches Interferometer in Verbindung mit einer geeigneten Strahlungsquelle für elektromagnetische Strahlung eingesetzt werden.

Es besteht aber auch die Möglichkeit eine entsprechend geeignete Strahlungsquelle für elektromagnetische Strahlung, die ein ausreichend großes Wellenlängenspektrum emittiert, in Verbindung mit einem an sich bekannten Spektrometer für die optische Detektion von in Abgasen enthaltenen Stoffen an sich und auch deren jeweiligen Anteils (Konzentration) im Abgas einzusetzen. Alternativ können auch monochromatische Strahlungsquellen, die in einem ausreichend breiten Wellenlängenbereich durchstimmbar sind, zusammen mit herkömmlichen Strahlungsdetektoren eingesetzt werden.

Der Strahlengang der jeweiligen elektromagnetischen Strahlung sowie die zwei Paare von Fensterelementen sollten dabei möglichst so ausgerichtet und angeordnet sein, dass eine unmittelbare Beeinflussung durch partikelförmige Bestandteile, die im Abgas enthalten sind, vermieden werden kann.

Hierfür kann es außerdem auch zweckmäßig sein, den Abgasstrom in, durch und aus dem Kanalelement entsprechend zu führen, wobei trotz allem gesichert sein sollte, dass auch eine Detektion solcher fester Partikel möglich ist.

Der bereits angesprochene Strahlengang der für die optische Detektion eingesetzten elektromagnetischen Strahlung durch die optische Messstrecke des Kanalelementes kann vorteilhaft oberhalb des vertikal unteren Bodens des Kanalelementes geführt sein, wobei es besonders vorteilhaft ist, diesen entgegengesetzt zur Strömungsrichtung des durch das Kanalelement geführten Abgasstromes in einem entsprechend schräg von oben nach unten geneigten Winkel auszurichten. Im letztgenannten Fall sollten dann ein Paar an Fensterelementen in unmittelbarer Nähe des vertikal unten angeordneten Bodens eines Kanalelementes und das jeweils andere Paar an Fensterelementen in einem bestimmten Abstand vom vertikal unteren Boden des Kanalelementes, also in einer bestimmten Höhe, bevorzugt im Bereich der vertikal oberen Wandung des Kanalelementes angeordnet sein, wobei die Anordnung der Fensterelemente die Dimensionierung und/oder Ausrichtung des jeweiligen Flansches in Bezug zum Kanalelement berücksichtigen kann.

Um eine Reduzierung des Einflusses von festen Partikeln auf die Detektion zumindest zu erreichen, besteht die Möglichkeit, den freien inneren Querschnitt des Kanalelementes, durch das der Abgasstrom geführt ist, zumindest bereichsweise zu vergrößern, so dass eine Verringerung der Strömungsgeschwindigkeit des abgesaugten Abgases zu einer gravimetrischen Trennung der Partikel aus dem Abgas führt. So kann beispielsweise ein Kanalelement einen Innenkonus mit sich in Strömungsrichtung des Abgases vergrößerndem freien Querschnitt ausgebildet sein.

Da Leckverluste im Fensterzwischenbereich nicht vollständig vermieden werden können, ist es vorteilhaft, innerhalb der Spalte zwischen den Paaren von Fensterelementen einen konstanten Innendruck einzustellen und gegebenenfalls eine Kontrolle der Dichtheit bieder Fenster durchzuführen. Hierfür kann beispielsweise über eine entsprechende Zufuhrleitung ein Regelventil oder ein normales Ventil in Verbindung mit einem Drucksensor ein Gas in die Spalte zwischen Paaren von Fensterelementen zugeführt werden, wenn beispielsweise Leckverluste aufgetreten sind. Für die Zufuhr kann ein Gas, beispielsweise Stickstoff eingesetzt werden, das dann zum einen inert ist und zum anderen die optische Detektion nicht beeinflusst.

In einer Weiterbildung der Erfindung besteht aber auch die Möglichkeit, zu bestimmten Zeitpunkten in einen oder auch beide Spalte zwischen Paaren von Fensterelementen ein Gas mit bekannter Zusammensetzung (Kalibriergas) einzuführen und über einen bestimmten Zeitraum eine Kalibrierung der optischen Messtechnik mit Hilfe der in einem solchen Gas enthaltenen Einzelkomponenten sowie deren jeweils bekannten Konzentrationen durchführen zu können.

Nach erfolgter Kalibrierung kann dieses Gas dann wieder abgesaugt werden und mit einem inerten, für die Detektion unkritischen Gas der jeweilige Spalt zwischen Fensterelementen mit entsprechendem Druck gefüllt werden.

Für die meisten zu detektierenden Stoffe kann eine entsprechende Strahlungsquelle, die elektromagnetische Strahlung im Wellenlängenbereich des infraroten und/oder nahen infraroten Lichtes emittiert und eine entsprechende Detektoreinheit eingesetzt werden. Für einige Gase sind ebenfalls im sichtbaren und ultravioletten Spektralbereich emittierende Strahlungsquellen vorteilhaft einsetzbar.

Die erfindungsgemäße Vorrichtung kann, wie bereits eingangs angedeutet, in unterschiedlichsten Applikationen eingesetzt werden. Besonders geeignet ist sie für die Detektion von Abgasen, die aus Vakuum- oder Reaktionskammern, die für unterschiedliche Oberflächenmodifizierungstechniken von Werkstücken eingesetzt werden. So können in solchen Vakuumkammern die verschiedensten an sich bekannten CVD- oder PVD-Verfahren bzw. Ätzprozesse durchgeführt werden, wobei mit der erfindungsgemäßen Vorrichtung eine Detektion sowohl bei eigentlichen Oberflächenmodifizierungsprozessen, wie die Ausbildung von Oberflächenbeschichtungen, Oberflächenstrukturen, aber auch bei zwischengeschalteten Reinigungsprozessen für Vakuumkammern eingesetzt werden.

Es kann in verschiedenen Druckbereichen innerhalb von Kanalelementen eine Detektion durchgeführt werden, wobei jeweils relativ breite Druckintervalle zulässig sind. So können beispielsweise Detektionen durchgeführt werden, wenn in an Vakuumkammern angeschlossenen Kanalelementen Drücke oberhalb von 0 bis zu 500 mbar zu verzeichnen sind. Das Verfahren kann aber ebenfalls im Atmosphärendruck- und Überdruckbereich angewandt werden. Vorteilhaft ist es dabei, gleichzeitig mit der Detektion von ausgewählten im Abgas enthaltenen Stoffen auch den jeweiligen Innendruck im Kanalelement und/oder die Strömungsgeschwindigkeit des durch das Kanalelement geführten Abgases zu bestimmen und zu berücksichtigen.

Die erfindungsgemäße Vorrichtung kann mit hoher Sicherheit betrieben werden, wobei auch ein Langzeiteinsatz möglich ist, ohne dass Wartungs- oder Reinigungsarbeiten erforderlich sind.

Nachfolgend soll die Erfindung beispielhaft näher erläutert werden.

Dabei zeigen:
- Figur 1: in schematischer Form ein Beispiel einer erfindungsgemäßen Vorrichtung für die Durchführung einer Detektion mittels FTIR-Spektroskopie;
- Figur 2: in schematischer Form ein zweites Beispiel mit in Bezug zur Horizontalen geneigtem Kanalelement;
- Figur 3: in schematischer Form ein Blockschaltbild mit Elementen zur Bestimmung von Innendrücken, der Zuführung verschiedener Gase und der Betätigung eines Verschlusselementes und
- Figur 4: in schematischer Form einen an ein Kanalelement anschließbaren Flansch mit zwei durch einen Spalt voneinander getrennten Fensterelementen sowie Zuführungen für Spülgas.

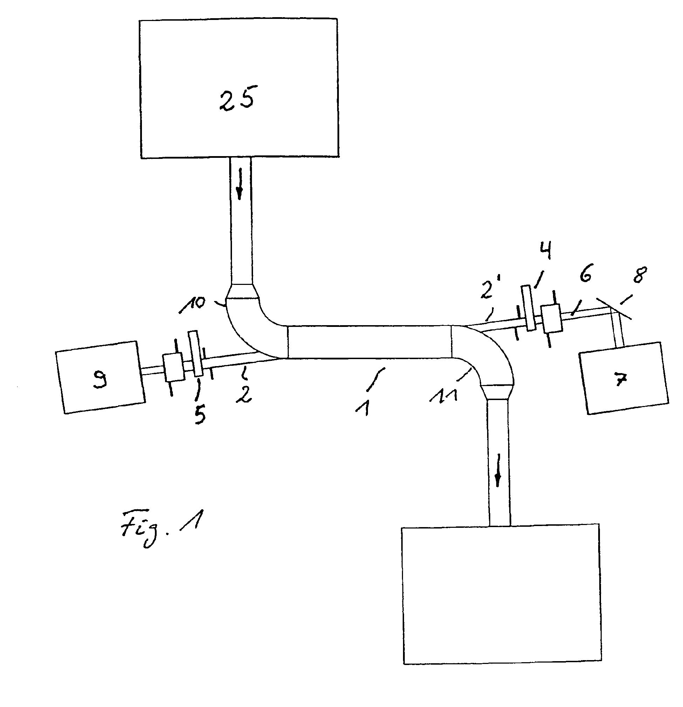

Die Figur 1 zeigt in schematischer Form ein Beispiel einer erfindungsgemäßen Vorrichtung, bei der die Detektion von in Abgasen enthaltenen Stoffen mittels FTIR-Spektroskopie durchgeführt werden kann.

Die in Figur 1 gezeigte Vorrichtung verwendet dabei ein zylinderförmiges Kanalelement 1 mit einem proximal angeordneten Eintritt für Abgas 10 aus einer Vakuumkammer 25 und einem Austritt für das Abgas 11.

Das Kanalelement 1 hat zwischen Ein- und Austritt 10 und 11 für Abgas eine Länge von 1000 mm und einen Innendurchmesser von mindestens 30 mm.

An der hier rechten Stirnseite des Kanalelementes 1 sind zwischen dem Austritt 11 für Abgas und der eigentlichen Stirnseite ein Flansch 2' mit einem Verschlusselement 4, wobei ein gasdichter Verschluss zwischen Kanalelement 1 und Umgebung gewährleistet worden ist. Außerhalb davon ist eine Strahlungsquelle 7 für elektromagnetische Strahlung 6, die über ein reflektierendes Element 8 durch den Flansch 2', hier nicht dargestellte im Flansch angeordnete Fensterelemente 3.1, 3.2, das Kanalelement 1 und den Flansch 2' auf den optischen Detektor 9 gerichtet wird.

Auf der linken Seite des Kanalelementes 1, vor dem Eintritt 10 für Abgas, ist in analoger Form wiederum der Flansch 2 mit nicht dargestellten Fensterelementen 3.1 und 3.2, sowie einem Verschlusselement 5 angeordnet.

Das Kanalelement 1 ist bei diesem Beispiel parallel zur Horizontalen ausgerichtet, was zumindest für den Teil zutrifft, der zur optischen Detektion genutzt wird.

In Figur 1 ist auf die Darstellung der Zuführung von Spülgas in die Flansche 2 und 2' und die Spülgasströmung innerhalb des Kanalelementes 1 verzichtet worden. Es wird aber deutlich, dass der Flansch 2 im Bereich des Eintritts 10 für Abgas im vertikal unteren Teil des Kanalelementes 1 und der gegenüberliegend angeordnete Flansch 2' im oberen Bereich an das Kanalelement 1 angeschlossen sind. Dies wirkt sich vorteilhaft auf die nahezu störungsfreie Abfuhr fester Partikel mit dem Abgas und die optischen Verhältnisse bei der Detektion aus, da die elektromagnetische Strahlung 6 in entsprechend von oben nach unten geneigtem Winkel durch das Kanalelement 1 verläuft.

Innerhalb des Kanalelementes 1 kann ein Innendruck im Bereich von vorzugsweise zwischen 0,1 bis 100 mbar vorliegen.

Die Flansche 2 und 2' sollten eine Länge aufweisen, die gewährleistet, dass zwischen der Mündung der Flansche 2 und 2' in das Kanalelement 1 und Fensterelement 3.1 bzw. 3.2 jeweils ein Abstand von ca. 200 mm eingehalten ist.

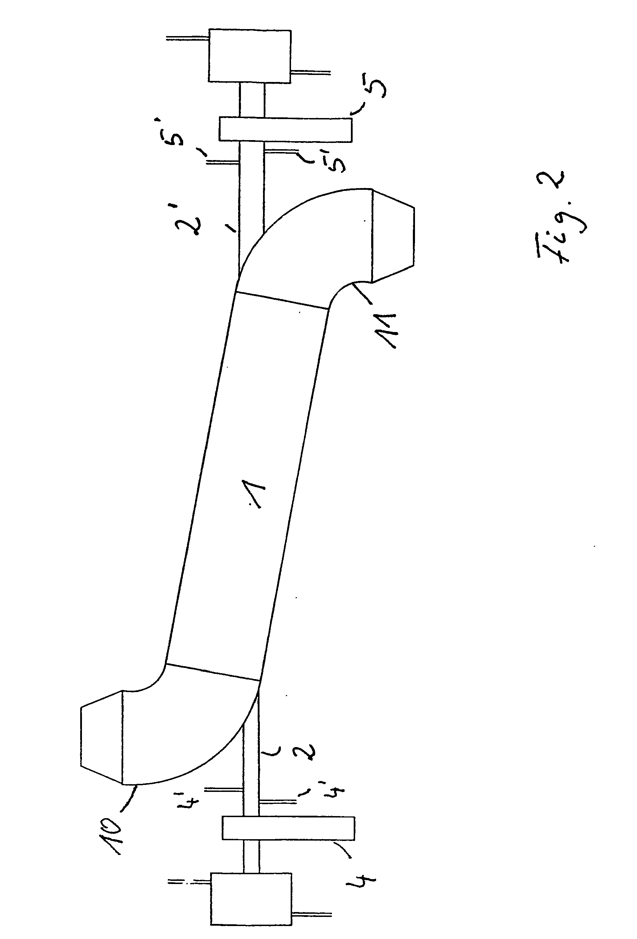

Mit Figur 2 soll eine gegenüber der Horizontalen geneigte Anordnung eines Kanalelementes 1 angedeutet werden, mit der die Abgasströmung mit einem entsprechenden Gefälle durch das Kanalelement 1 strömen kann.

Außerdem soll mit Figur 2 besonders verdeutlicht werden, dass an den Flanschen 2 und 2' zusätzliche Verschlusselemente 4 und 5 vorhanden sein können, die bei Bedarf, also in Havariesituationen oder auch in Zeiträumen in denen keine optische Detektion durchgeführt werden sollen, verschlossen werden können. Mit Hilfe der Verschlusselemente 4 und 5 kann einmal ein Schutz von Fensterelementen 3.1 und 3.2 vor Verschmutzung durch Anhaftungen erreicht werden. Außerdem kann eine gasdichte Abdichtung erreicht werden, wenn beispielsweise Undichtheiten im nachfolgenden Bereich der Flansche 2 und 2' und/oder an Fensterelementen 3.1 und 3.2 aufgetreten sind.

Im Bereich der Flansche 2 und 2' sind vor den Verschlusselementen 4 und 5 in Bezug zur Richtung des Kanalelementes 1, bei diesem Beispiel ebenfalls zusätzliche Spülgaszuführungen 4' und 5' vorhanden, durch die ein Spülgas zugeführt werden kann, wenn die Verschlusselemente 4 und 5 die Flansche verschlossen halten.

Außerdem soll darauf hingewiesen werden, dass in nicht dargestellter Form die Fensterelemente 3.1 und 3.2 in Strahlungsrichtung der elektromagnetischen Strahlung 6 unterschiedlich groß dimensioniert sein können. So sollten die Fensterelemente 3.1 und 3.2, die am Flansch 2', also in der Nähe der Strahlungsquelle 7 angeordnet sind, deutlich kleiner als die Fensterelemente 3.1 und 3.2, die in Richtung auf den Detektor 9 am Flansch 2 angeordnet sind, sein. So sollten die erstgenannten Fensterelemente 3.1, 3.2 einen Durchmesser von ca. 25 mm und die in Richtung auf den Detektor 9 angeordneten Fensterelemente 3.1 und 3.2 einen Durchmesser von ca. 40 mm aufweisen.

In beiden gezeigten Beispielen folgt der Strahlengang 6 der jeweiligen elektromagnetischen Strahlung einer schräg von oben nach unten geneigten Achse in Bezug zur Längsachse des Kanalelementes 1.

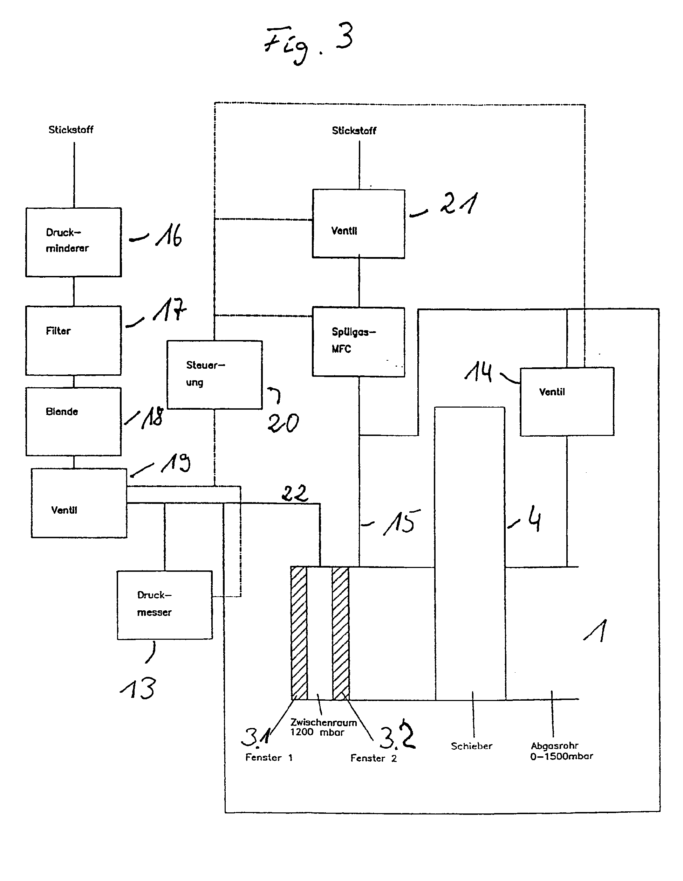

Das in Figur 3 gezeigte Blockschaltbild soll die unterschiedlichen Funktionen für Teile, die an einer erfindungsgemäßen Vorrichtung eingesetzt werden können, beispielhaft verdeutlichen.

So sind hier lediglich zwei transparente Fensterelemente 3.1 und 3.2 mit einem dazwischen liegenden Spalt dargestellt. Im Spalt zwischen den Fensterelementen 3.1 und 3.2 wird durch Zufuhr eines inerten Gases, beispielsweise Stickstoff ein konstanter Druck, hier beispielsweise 1200 mbar eingestellt. Die Einstellung des Innendruckes im Spalt zwischen Fensterelementen 3.1 und 3.2 kann mit Hilfe eines an einen Druckgasbehälter angeschlossenen Druckminderers 16, eines Filters 17, einer den Gasdurchfluss begrenzenden Blende 18, einem Ventil 19 und einem Drucksensor 13 erfolgen.

Der Drucksensor 13 kann außerdem in den bereits im allgemeinen Teil der Beschreibung angesprochenen kritischen Fällen eine Änderung des Innendruckes im Spalt detektieren und diese Änderung auf eine elektronische Steuerung 20 geben.

Wird eine einen entsprechend vorgebbaren Wert überschreitende Druckänderung detektiert, kann mittels der Steuerung 20 das Ventil 14 angesteuert werden, das wiederum das jeweilige Verschlusselement 4 oder 5 am Flansch 2 oder 2' aktiviert, um einen gasdichten Verschluss des Kanalelementes 1 in Bezug zur Umgebung zu erreichen.

Des Weiteren ist in Figur 3 in schematischer Form auch eine Zuführung von Stickstoff als einem geeigneten Spülgas in das Kanalelement 1 dargestellt. Das kann wiederum über ein mittels der elektronischen Steuerung 20 gesteuertes Ventil 21, das an einen Druckgasbehälter angeschlossen ist und über Zuführungen 15 erfolgen. Die Zuführung 15 für ein solches Spülgas ist dabei in unmittelbarer Nähe der in das Innere des Kanalelementes 1 weisenden Oberfläche des Fensterelementes 3.2 angeordnet.

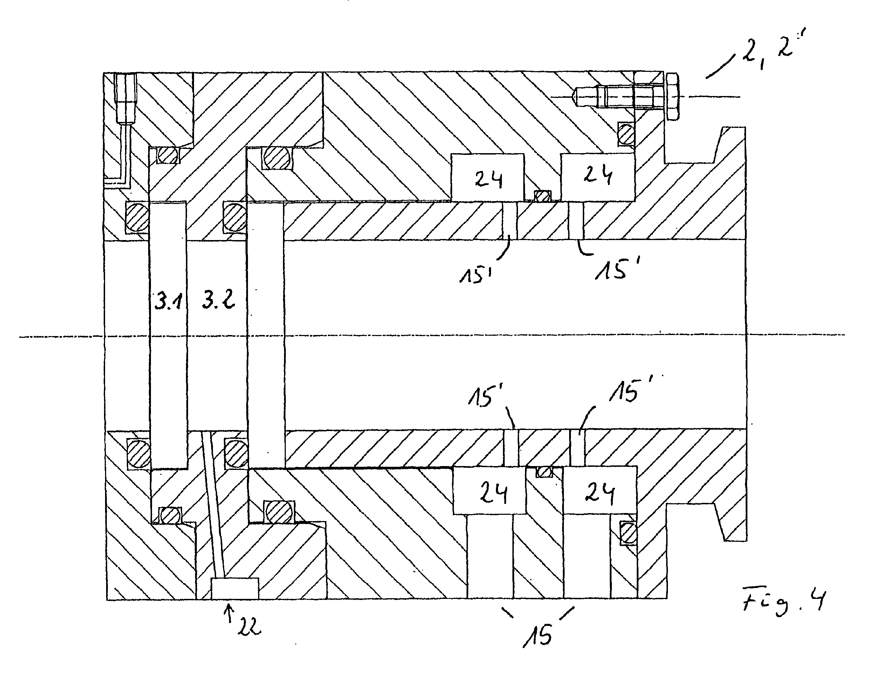

In Figur 4 ist ein Flansch 2 oder 2', der an ein hier nicht dargestelltes Kanalelement 1 angeschlossen und mit diesem gasdicht verbunden werden kann, gezeigt.

Ein solcher Flansch 2 bzw. 2' kann Träger für zwei transparente Fensterelemente 3.1 und 3.2, die mit einem dazwischen liegenden Spalt zueinander angeordnet und innerhalb des Flansches 2 oder 2' durch entsprechende Dichtungen gasdicht abgeschlossen sind, an einem Kanalelement 1 befestigt werden. Am Flansch 2 oder 2' sind ein oder mehrere Kanäle ausgebildet, die eine fluide Verbindung zwischen dem Spalt, der zwischen den Fensterelementen 3.1 und 3.2 ausgebildet ist und der Leitung 22 darstellen. Über diese Leitung 22 kann sowohl durch Zufuhr eines entsprechenden Gases ein konstanter Innendruck im Spalt eingestellt, aber auch eine Detektion des Innendruckes im Spalt erfolgen, und bei entsprechend detektierter Änderung, wie dies bereits bei der Erläuterung zu Figur 3 erklärt worden ist, eine Aktivierung eines Verschlusselementes 5 (hier nicht dargestellt), erreicht werden.

Des Weiteren sind an dem hier gezeigten Flansch 2 oder 2' auch Anschlüsse für eine Zuleitung 15, durch die Spülgas eingeführt werden kann, vorhanden.

Diese Zuleitungen 15 sind mit einer oder hier zwei um einen Teil des Flansches 2 oder 2' umlaufenden Ringkammer(n) 24 verbunden.

Durch Spülgaszuführungen 15' kann dann ein Spülgas in das Innere des Flansches 2 oder 2', das mit dem Kanalelement 1 kommuniziert, eingeführt werden.

Die Spülgaszuführungen 15' sind dabei in einem Abstand zur nach Innen weisenden Oberfläche des Fensterelementes 3.2 und hier wiederum in zwei Ebenen, die zueinander beabstandet sind, angeordnet, so dass sich Druck- und Strömungsverhältnisse einstellen lassen, die ein unmittelbares Auftreffen von partikelförmigen Bestandteilen und gegebenenfalls auch andere die Oberfläche des Fensterelemente 3.2 angreifenden, im Abgas enthaltenen Komponenten verhindern.

Außerdem soll über den Flansch 2 Spülgas so in das Kanalelement 1 eingeführt werden, dass sich die laminare Spülgasströmung im Bodenbereich des Kanalelementes 1 ausbilden kann, mit der eine störungsfreie Abführung von festen Partikeln erreichbar ist.

Die Fensterelemente 3.1 und 3.2 sind so ausgewählt, dass sie für die jeweilige für die optische Detektion genutzte elektromagnetische Strahlung im interessierenden Wellenlängenbereich transparent sind.

## Patentansprüche

1. Vorrichtung zur optischen Detektion von in Abgasen chemischer Prozesse enthaltenen Stoffen,
bei der Abgase durch ein eine optische Messstrecke bildendes Kanalelement (1) geführt sind,
am Kanalelement (1) zwei mit jeweils mindestens einem Fensterelement (3.1, 3.2) gegenüber der Umgebung verschlossene Flansche (2, 2'), durch die elektromagnetische Strahlung (6) zur optischen Detektion der jeweiligen Stoffe von einer Strahlungsquelle (7) zu einem optischen Detektor (9) gerichtet ist, und zusätzlich durch die Flansche (2, 2') ein Spülgas in das Kanalelement (1) einströmt, angeschlossen sind,
**dadurch gekennzeichnet, dass** ein Flansch (2) im **Bodenbereich derart in** das Kanalelement (**1) mündet, dass dabei das aus dem Flansch (2) austretenden Spülgas** in Strömungsrichtung des Abgases in das Kanalelement (1) einströmt und
die elektromagnetische Strahlung vom Eintritt bis zum Austritt aus dem Kanalelement (1) durch die entsprechend am Kanalelement (1) angeordneten Flansche (2, 2') und durch die jeweiligen Fensterelemente (3.1, 3.2) in einem schräg von oben nach unten geneigten Winkel in Bezug zurlängsachse des kanalelementes (1) gerichtet ist.

2. Vorrichtung nach Anspruch 1,
**dadurch gekennzeichnet, dass** ein Flansch (2), der im Bereich des Eintritts für Abgas (10) in das Kanalelement (1) so angeordnet ist, dass sich mit dem in den Flansch (2) eingeführten Spülgas im Bodenbereich des Inneren des Kanal-elementes (1) eine geschlossene laminare Spülgasströmung ausbildet.

3. Vorrichtung nach Anspruch 1 oder 2,
**dadurch gekennzeichnet, dass** mindestens eine Spülgaszuführung (15) in einem Abstand zum Mündungsbereich des Flansches (2) in das Kanalelement (1) angeordnet ist.

4. Vorrichtung nach einem der vorhergehenden Ansprüche, **dadurch gekennzeichnet, dass** die Längsachse des Kanalelementes (1) horizontal ausgerichtet oder in einem maximalen Winkel bis zu 45° in Bezug zur Horizontalen in vertikaler Richtung geneigt ist.

5. Vorrichtung nach einem der vorhergehenden Ansprüche, **dadurch gekennzeichnet, dass** aus dem distal angeordneten Flansch (2') austretendes Spülgas entgegengesetzt zur Strömungsrichtung des Abgases in das Kanalelement (1) einströmt.

6. Vorrichtung nach einem der vorhergehenden Ansprüche, **dadurch gekennzeichnet, dass** das Kanalelement (1) in Strömungsrichtung des Abgases einen zumindest bereichsweise sich vergrößernden freien Innenquerschnitt aufweist.

7. Vorrichtung nach einem der vorhergehenden Ansprüche, **dadurch gekennzeichnet, dass** an einen Spalt zwischen zwei an einem Flansch (2, 2') angeordneten Fensterelementen (3.1, 3.2) eine Einrichtung zur Einstellung eines konstanten Innendruckes vorhanden ist.

8. Vorrichtung nach einem der vorhergehenden Ansprüche, **dadurch gekennzeichnet, dass** Zuführungen (15) für inertes Spülgas in mehreren Ebenen vor Fensterelementen (3.1, 3.2) in den Flanschen (2, 2') angeordnet sind.

9. Vorrichtung nach einem der vorhergehenden Ansprüche, **dadurch gekennzeichnet, dass** das Kanalelement (1) an eine Vakuumkammer angeschlossen ist.

10. Vorrichtung nach einem der vorhergehenden Ansprüche, **dadurch gekennzeichnet, dass** die Strahlungsquelle (7) elektromagnetische Strahlung (6) im Wellenlängenbereich des infraroten oder nahen infraroten Lichtes emittiert.

11. Vorrichtung nach einem der vorhergehenden Ansprüche, **dadurch gekennzeichnet, dass** sie an eine Steuerung/Regelung für den jeweiligen chemischen Prozess angeschlossen ist.

12. Verfahren zur optischen Detektion von in Abgasen chemischer Prozesse enthaltenen Stoffen, bei dem
Abgase durch ein eine optische Messstrecke bildendes Kanalelement (1) strömen und
durch das strömende Abgas und durch das Kanalelement (1) elektromagnetische Strahlung (6) auf einen optischen Detektor (9) gerichtet wird, **dadurch gekennzeichnet, dass**
mittels von einem Flansch (2) in das Kanalelement (1) parallel zur Abgasströmung eingeführtem Spülgas im unteren Bodenbereich des Kanalelementes (1) eine laminare Spülgasströmung ausgebildet wird, die eine Anhaftung von festen im Abgas enthaltenen Stoffen an der Innenwand des Kanalelementes (1) verhindert, und die elektromagnetische
Strahlung vorm Eintritt bis zum Austritt aus dem kanalelement (1) durch die entsprechend aus kanalelement (1) angeordneten Flansche (2,2') und durch jeweilige Fensterelemente (3.1, 3.2) in einem schräg von oben nach unten geneigten Winkel in Bezug zur Längsachse des kanalelementes (1) gerichtet ist.

13. Verfahren nach Anspruch 12, **dadurch gekennzeichnet, dass** ein inertes Spülgas und/oder ein Spülgas bekannter Konsistenz eingeführt wird.

14. Verfahren nach Anspruch 12 oder 13,
**dadurch gekennzeichnet, dass** das Spülgas im Kanalelement (1) maximal 20 % des freien Querschnitts im Bodenbereich ausfüllt.

15. Verfahren nach einem der Ansprüche 12 bis 14,
**dadurch gekennzeichnet, dass** über einen zweiten Flansch (2'), der eine optische Verbindung für elektromagnetische Strahlung (6) mit der Strahlungsquelle (7) bildet, ebenfalls Spülgas in das Kanalelement (1) einströmt.

16. Verfahren nach einem der Ansprüche 12 bis 15,
**dadurch gekennzeichnet, dass** über zwei Spülgaszuführungen (15') in den Flanschen (2, 2') eine Spülgaszuführung in einem Abstand zueinander und in einem Abstand vor mindestens einem Fensterelement (3.1, 3.2) realisiert wird.

17. Verfahren nach Anspruch 16,
**dadurch gekennzeichnet, dass** innerhalb der Flansche (2, 2') vor Fensterelementen (3.1, 3.2) eine spiralförmig zirkulierende Spülgasströmung ausgebildet wird.

18. Verfahren nach einem der Ansprüche 12 bis 17,
**dadurch gekennzeichnet, dass** der jeweilige zugeführte Spülgasvolumenstrom in Abhängigkeit des jeweiligen Abgasvolumenstromes und/oder der Strömungsgeschwindigkeit des Abgases im Kanalelement (1) geregelt wird.

19. Verfahren nach einem der Ansprüche 12 bis 18,
**dadurch gekennzeichnet, dass** für mindestens einen im Abgas enthaltenen Stoff eine absorptionsspektroskopische Detektion durchgeführt wird.

20. Verfahren nach einem der Ansprüche 12 bis 19,
**dadurch gekennzeichnet, dass** mittels des Detektionsergebnisses der chemische Prozess geregelt wird.

## Claims

1. A device for the optical detection of substances contained in waste gases of chemical processes,
in which waste gases are conducted through a duct element (1) forming an optical measuring section,
two flanges (2, 2'), closed off from the environment by at least one window element (3.1, 3.2) in each case, are connected to the duct element (1), through which flanges electromagnetic radiation (6) for the optical detection of the respective substances is directed from a radiation source (7) to an optical detector (9), and in addition through the flanges (2, 2') a purge gas flows into the duct element (1),
**characterised in that** one flange (2) opens into the duct element (1) in the base region in such a way that the purge gas exiting from the flange (2) flows in the flow direction of the waste gas into the duct element (1) and
the electromagnetic radiation is directed from the entry to the exit out of the duct element (1) through the flanges (2, 2') accordingly arranged on the duct element (1) and through the respective window elements (3.1, 3.2) at an angle inclined obliquely from the top to the bottom with respect to the longitudinal axis of the duct element (1).

2. A device according to Claim 1,
**characterised in that** a flange (2) which is arranged in the region of the entry for waste gas (10) into the duct element (1) such that a closed laminar purge gas flow forms with the purge gas introduced into the flange (2) in the base region of the interior of the duct element (1).¹

3. A device according to Claim 1 or 2,
**characterised in that** at least one purge gas feed (15) is arranged at a distance from the opening region of the flange (2) into the duct element (1).

4. A device according to one of the preceding claims, **characterised in that** the longitudinal axis of the duct element (1) is oriented horizontally or is inclined in the vertical direction at a maximum angle of up to 45° with respect to the horizontal.

5. A device according to one of the preceding claims, **characterised in that** purge gas exiting from the distally arranged flange (2') flows into the duct element (1) in the opposite direction to the flow direction of the waste gas.

6. A device according to one of the preceding claims, **characterised in that** the duct element (1) has a free internal cross-section increasing at least in regions in the flow direction of the waste gas.

7. A device according to one of the preceding claims, **characterised in that** there is an arrangement for setting a constant internal pressure at a gap between two window elements (3.1, 3.2) arranged on a flange (2, 2').

8. A device according to one of the preceding claims, **characterised in that** feeds (15) for inert purge gas are arranged in several planes in front of window elements (3.1, 3.2) in the flanges (2,2').

9. A device according to one of the preceding claims, **characterised in that** the duct element (1) is connected to a vacuum chamber.

10. A device according to one of the preceding claims, **characterised in that** the radiation source (7) emits electromagnetic radiation (6) in the wavelength range of infrared light or near infrared light.

11. A device according to one of the preceding claims, **characterised in that** it is connected to a control/regulating system for the respective chemical process.

12. A method for the optical detection of substances contained in waste gases of chemical processes, in which
waste gases flow through a duct element (1) forming an optical measuring section, and
electromagnetic radiation (6) is directed through the flowing waste gas and through the duct element (1) onto an optical detector (9),
**characterised in that**
by means of purge gas introduced from a flange (2) into the duct element (1) parallel to the waste gas flow, a laminar purge gas flow is formed in the bottom base region of the duct element (1), which prevents adhering of solid substances contained in the waste gas to the interior wall of the duct element (1), and the electromagnetic radiation is directed from the entry to the exit out of the duct element (1) through the flanges (2, 2') accordingly arranged on the duct element (1) and through respective window elements (3.1, 3.2) at an angle inclined obliquely from the top to the bottom with respect to the longitudinal axis of the duct element (1).

13. A method according to Claim 12, **characterised in that** an inert purge gas and/or a purge gas of known consistency is introduced.

14. A method according to Claim 12 or 13,
**characterised in that** the purge gas in the duct element (1) fills up a maximum of 20 % of the free cross-section in the base region.

15. A method according to one of Claims 12 to 14,
**characterised in that** purge gas also flows into the duct element (1) via a second flange (2') which forms an optical connection for electromagnetic radiation (6) with the radiation source (7).

16. A method according to one of Claims 12 to 15,
**characterised in that** a purge gas supply is implemented via two purge gas feeds (15') in the flanges (2, 2') at a distance from one another and at a distance in front of at least one window element (3.1, 3.2).

17. A method according to Claim 16,
**characterised in that** a spirally circulating purge gas flow is formed within the flanges (2, 2') in front of window elements (3.1, 3.2).

18. A method according to one of Claims 12 to 17,
**characterised in that** the respective purge gas volume flow supplied is regulated in dependence on the respective waste gas volume flow and/or the speed of flow of the waste gas in the duct element (1).

19. A method according to one of Claims 12 to 18,
**characterised in that** an absorption spectroscopic detection is carried out for at least one substance contained in the waste gas.

20. A method according to one of Claims 12 to 19,
**characterised in that** the chemical process is regulated by means of the detection result.

## Revendications

1. Dispositif pour la détection optique de substances contenues dans des gaz rejetés de processus chimiques,
dans lequel les gaz rejetés sont envoyés à travers un élément en forme de conduit (1) constituant un segment de mesure,
à l'élément en forme de conduit (1) sont raccordés deux éléments de raccord (2, 2') fermés vis-à-vis de l'environnement, comportant chacun au moins un élément à fenêtre (3.1, 3.2), à travers lesquels un rayonnement électromagnétique (6) pour la détection des substances respectives est conduit d'une source de rayonnement (7) à un détecteur optique (9), et en outre un gaz de lavage passe dans les éléments de raccord (2, 2') pour circuler dans l'élément en forme de conduit (1),
**caractérisé en ce qu'**un élément de raccord (2) débouche dans la partie inférieure de l'élément en forme de conduit (1) de telle sorte que le gaz de lavage sortant de l'élément de raccord (2) circule dans l'élément en forme de conduit (1) dans le sens de flux du gaz rejeté et
le rayonnement électromagnétique est dirigé sous un angle à inclinaison de haut en bas, par rapport à l'axe longitudinal de l'élément en forme de conduit (1), de l'entrée à la sortie de l'élément en forme de conduit (1), à travers les éléments de raccord (2, 2') convenablement disposés sur l'élément en forme de conduit (1) et à travers les éléments à fenêtre (3.1, 3.2) respectifs.

2. Dispositif selon la revendication 1, **caractérisé en ce qu'**un élément de raccord (2) est disposé dans la zone de l'entrée pour le gaz rejeté (10) dans l'élément en forme de conduit (1) de telle sorte qu'il se forme avec le gaz de lavage, introduit dans l'élément de raccord (2) dans la partie inférieure de l'intérieur de l'élément en forme de conduit (1), un flux laminaire continu de gaz de lavage.

3. Dispositif selon la revendication 1 ou 2, **caractérisé en ce qu'**au moins un conduit d'arrivée de gaz de lavage (15) est disposé dans l'élément en forme de conduit (1) à une certaine distance de la zone où débouche l'élément de raccord (2).

4. Dispositif selon l'une quelconque des revendications précédentes, **caractérisé en ce que** l'axe longitudinal de l'élément en forme de conduit (1) est horizontal ou incliné en direction verticale sous un angle maximal de jusqu'à 45° par rapport à l'horizontale.

5. Dispositif selon l'une quelconque des revendications précédentes, **caractérisé en ce que** le gaz de lavage sortant de l'élément de raccord (2') en position distale circule à contre-courant par rapport au sens de flux du gaz rejeté dans l'élément en forme de conduit (1).

6. Dispositif selon l'une quelconque des revendications précédentes, **caractérisé en ce que** l'élément en forme de conduit (1) présente dans le sens du flux du gaz rejeté une section transversale interne libre augmentant au moins dans une zone.

7. Dispositif selon l'une quelconque des revendications précédentes, **caractérisé en ce qu'**à un certain intervalle entre deux éléments à fenêtre (3.1, 3.2) disposés sur un élément de raccord (2, 2') est présent un dispositif pour l'ajustement d'une pression interne constante.

8. Dispositif selon l'une quelconque des revendications précédentes, **caractérisé en ce que** des conduits d'arrivée (15) de gaz inerte de lavage sont disposés dans plusieurs plans avant les éléments à fenêtre (3.1, 3.2) dans les éléments de raccord.

9. Dispositif selon l'une quelconque des revendications précédentes, **caractérisé en ce que** l'élément en forme de conduit (1) est raccordé à une chambre à vide.

10. Dispositif selon l'une quelconque des revendications précédentes, **caractérisé en ce que** la source de rayonnement (7) émet un rayonnement électromagnétique (6) dans la gamme de longueurs d'onde de la lumière infrarouge ou infrarouge proche.

11. Dispositif selon l'une quelconque des revendications précédentes, **caractérisé en ce qu'**il est raccordé à une commande/régulation pour le processus chimique respectif.

12. Procédé pour la détection optique de substances contenues dans des gaz rejetés de processus chimiques, dans lequel
les gaz rejetés circulent à travers un élément en forme de conduit (1) constituant un segment de mesure optique et
un rayonnement magnétique (6) est dirigé, à travers le gaz rejeté circulant et à travers l'élément en forme de conduit (1), sur un détecteur optique (9),
**caractérisé en ce que**
au moyen d'un gaz de lavage introduit par un élément de raccord (2) dans l'élément en forme de conduit (1), parallèlement au flux de gaz rejeté, dans la partie inférieure de l'élément en forme de conduit (1), est formé un flux laminaire de gaz de lavage qui empêche une adhérence de substances solides, contenues dans le gaz rejeté, à la paroi interne de l'élément en forme de conduit (1), et le rayonnement électromagnétique est dirigé sous un angle à inclinaison de haut en bas, par rapport à l'axe longitudinal de l'élément en forme de conduit (1), de l'entrée à la sortie de l'élément en forme de conduit (1), à travers les éléments de raccord (2, 2') convenablement disposés sur l'élément en forme de conduit (1) et à travers les éléments à fenêtre (3.1, 3.2) respectifs.

13. Procédé selon la revendication 12, **caractérisé en ce qu'**un gaz inerte de lavage et/ou un gaz de lavage de consistance connue est/sont introduit(s).

14. Procédé selon la revendication 12 ou 13, **caractérisé en ce que** le gaz de lavage occupe au maximum 20 % de la section transversale libre dans l'élément en forme de conduit (1).

15. Procédé selon l'une quelconque des revendications 12 à 14, **caractérisé en ce qu'**également du gaz de lavage circule dans l'élément en forme de conduit (1) par un deuxième élément de raccord (2') qui forme une jonction optique pour le rayonnement électromagnétique (6) avec la source de rayonnement (7).

16. Procédé selon l'une quelconque des revendications 12 à 15, **caractérisé en ce qu'**une alimentation en gaz de lavage est réalisée par deux conduits d'alimentation en gaz de lavage (15') dans les éléments de raccord (2, 2'), à une certaine distance entre eux et à une certaine distance avant au moins un élément à fenêtre (3.1, 3.2).

17. Procédé selon la revendication 16, **caractérisé en ce qu'**un flux de gaz de lavage à circulation hélicoïdale est réalisé à l'intérieur des éléments de raccord (2, 2') avant les éléments à fenêtre (3.1, 3.2).

18. Procédé selon l'une quelconque des revendications 12 à 17, **caractérisé en ce que** le flux volumique de gaz de lavage envoyé respectif est réglé en fonction du flux volumique de gaz rejeté respectif et/ou de la vitesse de circulation du gaz rejeté dans l'élément en forme de conduit (1).

19. Procédé selon l'une quelconque des revendications 12 à 18, **caractérisé en ce qu'**une détection par spectroscopie d'absorption est effectuée pour au moins une substance contenue dans le gaz rejeté.

20. Procédé selon l'une quelconque des revendications 12 à 19, **caractérisé en ce que** le processus chimique est réglé au moyen du résultat de la détection.
